# FASCICULE DE BREVET EUROPEEN

(11) **EP 2 446 630 B1**
(45) Date de publication et mention de la délivrance du brevet: **26.02.2020**
(21) Numéro de dépôt: 10734516.7
(22) Date de dépôt: 21.06.2010
(51) Int. Cl.: H04N 19/105, H04N 19/176, H04N 19/11, H04N 19/136

(54) **CODAGE ET DÉCODAGE D'UNE SÉQUENCE D'IMAGES VIDÉO PAR ZONES D'IMAGE**
CODIERUNG UND DECODIERUNG EINER VIDEOBILDSEQUENZ NACH BILDBEREICHEN
ENCODING AND DECODING A VIDEO IMAGE SEQUENCE BY IMAGE AREAS

(30) Priorité: 23.06.2009 FR 0954260
(43) Date de publication de la demande: 02.05.2012
(73) Titulaire: Orange, 75015 Paris (FR)
(72) Inventeur: AMONOU, Isabelle, F-35510 Cesson Sevigne (FR); MOINARD, Matthieu, F-35510 Cesson Sevigne (FR); COROUGE, Isabelle, F-35000 Rennes (FR)
(86) Numéro de dépôt international: PCT/FR2010/051247
(87) Numéro de publication internationale: WO 2010/149913

(56) Documents cités:
- EP-A- 2 101 504
- WO-A-2008/082158
- WO-A-2008/083633
- WO-A-2009/037828
- THIOW KENG TAN ET AL: "Intra Prediction by Template Matching" 1 octobre 2006 (2006-10-01), PROCEEDINGS. INTERNATIONAL CONFERENCE ON IMAGE PROCESSING, XX, XX, PAGE(S) 1693 - 1696 , XP007902431 page 1693, alinéa 1 page 1694, alinéa 3.1 - page 1695, alinéa 3.2; figures 1,2
- YOSHINORI SUZUKI ET AL: "Inter Frame Coding with Template Matching Averaging", IMAGE PROCESSING, 2007. ICIP 2007. IEEE INTERNATIONAL CONFERENCE ON, IEEE, PI, 1 September 2007 (2007-09-01), pages III-409, XP031158091, ISBN: 978-1-4244-1436-9

## Description

La présente invention concerne de manière générale le codage et le décodage de séquence d'images vidéo.

Les codeurs vidéo actuels (normes MPEG, H264, ...) utilisent une représentation par blocs de la séquence vidéo. Les images sont découpées en macro-blocs, chaque macro-bloc est lui-même découpé en blocs et chaque bloc ou macro-bloc est codé par prédiction intra-images ou inter-images.

L'invention s'applique dans le contexte de ce type de codage, mais aussi dans celui d'un codeur par régions (codage basé région dans la norme MPEG 4, JVT - ISO/IEC JTC1/SC29/WG11, "Text of ISO/IEC 14496-10:200X / FDIS Advanced Video Coding", Draft International Standard, w9198, 2007).

L'invention concerne plus particulièrement la prédiction d'un bloc, d'un macrobloc, d'une région, ou de manière générale d'une zone de l'image à coder.

La prédiction est soit réalisé en mode intra, c'est-à-dire à partir de données de l'image en cours de codage, soit en mode inter, c'est-à-dire à partir d'une ou de plusieurs autres images de la séquence.

En mode intra, un macro-bloc ou un bloc est prédit à partir de son voisinage causal (les pixels adjacents qui ont déjà été codés puis décodés), selon neuf modes possibles : huit par recopie des pixels selon une orientation donnée et un pour la moyenne.

En mode inter, un macro-bloc ou un bloc est prédit à partir de son voisinage temporel, la norme H.264 utilise un déplacement au sens du mouvement. Au moins un vecteur de mouvement est alors codé et transmis.

Dans les deux cas, la prédiction est insuffisante à elle seule, d'où la nécessité de coder l'erreur de prédiction (le résidu). Pour cela, une transformée DCT est utilisée, suivie d'une quantification et d'un codage classique des coefficients.

Par ailleurs, dans le domaine de la synthèse d'image, Wei et Levoy ont proposé la technique dite de "template matching" (ou prédiction markovienne des textures) pour synthétiser une image à partir d'une image source. On peut faire référence à l'article Wei, L. & Levoy, M. Akeley, K. (ed.) Fast Texture Synthesis Using Tree-Structured Vector Quantization Siggraph 2000, Computer Graphics Proceedings, ACM Press / ACM SIGGRAPH / Addison Wesley Longman, 2000, 479-488).

La technique de "*template matching*" est basée sur les corrélations entre pixels voisins. La valeur de chaque pixel (ou groupe de pixels) de l'image à synthétiser est déterminée en comparant chaque voisin de ce pixel (cible) avec tous les voisins d'une image source. Les voisins du pixel à synthétiser sont les pixels du voisinage causal, c'est-à-dire des pixels préalablement synthétisés. Le pixel (ou groupe de pixels) de l'image source avec le voisinage le plus similaire est assigné au pixel (ou groupe de pixels) correspondant de l'image à synthétiser. Les zones à synthétiser (pixels ou groupes de pixels) sont synthétisées par copie dans un ordre précis, généralement de haut en bas et de gauche à droite (ordre dit "raster scan").

Le plus proche voisinage dans l'image source est choisi sur des critères de minimisation d'une distance entre les voisinages cible et source, par exemple l'erreur quadratique (en anglais : *Sum of Squared Differences*) ou absolue (en anglais : *Sum of Absolute Differences*)*.*

La méthode de "template matching" est une méthode de synthèse de données qui est utilisée dans certains codeurs comme alternative à la prédiction intra du codeur H264 (article Intra prediction by template matching de Tan et al, 2006 IEEE, pages 1693 à 1696). En pratique, un mode "template matching "est ajouté aux neuf autres modes de prédiction intra.

Dans l'article de Tan, la méthode de "template matching" est utilisée pour prédire les blocs de taille 4x4 pixels, eux-mêmes découpés en sous-blocs 2x2 pixels. Le bloc à prédire est considéré comme la cible (l'image à synthétiser), la source étant l'image partiellement décodée.

Les gains en termes de débit s'élèvent jusqu'à 11%, avec un taux d'utilisation du nouveau mode de prédiction intra "template matching" de l'ordre de 30%.

Le concept du "template matching" a été amélioré (article Video Encoding Scheme Employing Intra and Inter Prediction Based on Averaged Template Matching Predictors de Suzuki et al., 2008, The Institute of Electronics, Information and Communication Engineers, pages 1127 à 1134). Suzuki et al. ont constaté que le meilleur candidat au sens de la méthode de "template matching" n'est pas forcément le meilleur représentant pour prédire l'image. À partir de cette constatation, Suzuki et al. ont adapté la méthode du template matching : une cible est prédite à partir de la moyenne des N meilleurs candidats.

Avec cette méthode, la zone de travail est prédite par une pondération des quatre meilleurs candidats au sens de la méthode de "template matching". De ce fait, la prédiction a un rendu plus "flou" dû à l'effet moyenneur. Bien que la réduction de débit soit notable, cette amélioration de la méthode standard n'améliore pas, ou peu, la prédiction intra mais homogénéise le résidu.

Dans le cas de la prédiction inter-image, la méthode de "template matching "est utilisée pour estimer le mouvement d'un bloc ou macro-bloc d'une image à l'autre à partir de son voisinage (Suzuki, Y.; Boon, C. S. & Kato, S. Block-Based Reduced Resolution Inter Frame Coding with Template Matching Prediction Image Processing, 2006 IEEE International Conference on, 2006, 1701-1704). L'objectif est de réduire l'information additionnelle nécessaire pour coder les vecteurs de mouvement. Pour chaque macro-bloc prédit temporellement, la méthode de "template matching" est comparée à l'approche standard par recherche et codage du vecteur de mouvement. Un critère débit-distorsion permet de déterminer la meilleure méthode.

Dans le document Yoshinori Suzuki et al : « Inter Frame Coding with Template Matching Averaging », IMAGE PROCESSING, 2007. ICIP 2007. IEEE INTERNATIONAL CONFERENCE ON, IEEE, PI, 1 september 2007 (2007-09-01), pages III-409, XP031158091, ISBN : 978-1-4244-1436-9, il est proposé un procédé de codage d'une séquence d'images vidéo, dans lequel, pour coder une zone cible d'une image courante, il est déterminé un ensemble de voisinages candidats associés respectivement à des zones source candidates qui appartiennent à des parties préalablement codées puis décodées d'images de la séquence. Ces voisinages candidats minimisent une erreur de prédiction calculée sur le voisinage de la zone cible.

La présente invention a pour but de résoudre les inconvénients de la technique antérieure.

A cette fin, l'invention propose un procédé de codage d'une séquence d'images vidéo selon la revendication 1.

Grâce à l'invention, la méthode dite de "template matching" est utilisée pour déterminer un ensemble de candidat pour prédire une zone d'image. On travaille donc sur un voisinage de la zone à prédire.

Ensuite, le meilleur candidat parmi cet ensemble est déterminé, mais différemment de la méthode de "template matching". La détermination du meilleur candidat repose sur un calcul d'erreur de prédiction effectué sur la zone elle-même, et non plus sur son voisinage.

Enfin, l'invention propose de travailler sur des groupes de zones candidates.

Selon une caractéristique préférée, le procédé de codage comporte en outre les étapes de :
- détermination d'un représentant pour chacun des K groupes,
- identification d'un meilleur représentant minimisant une erreur de reconstruction par rapport à la zone cible.

Selon des caractéristiques préférées alternatives, pour un groupe donné
- le représentant est une moyenne des zones candidates du groupe,
- le représentant est une zone candidate du groupe qui minimise une erreur de reconstruction par rapport à la zone cible.

Selon une caractéristique préférée, la détermination de l'ensemble de zones candidates est effectuée à partir de zones déjà codées et décodées de l'image courante.

Il s'agit alors d'un mode de codage "intra" selon lequel on utilise une prédiction spatiale.

Selon une autre caractéristique préférée alternative, la détermination de l'ensemble de zones candidates est effectuée à partir de zones d'images codées et décodées préalablement à l'image courante.

Il s'agit dans ce cas d'un mode de codage "inter" selon lequel on utilise une prédiction temporelle.

Ainsi, l'invention s'applique aussi bien à un codage "intra" qu'à un codage "inter".

L'invention concerne aussi un procédé de décodage d'une séquence d'images vidéo selon la revendication 10.

Le procédé de décodage comporte des étapes très similaires à celles du procédé de codage.

Selon une caractéristique préférée, la détermination de l'ensemble de zones candidates est effectuée à partir de zones déjà décodées de l'image courante.

Selon une autre caractéristique préférée alternative, la détermination de l'ensemble de zones candidates est effectuée à partir de zones d'images décodées préalablement à l'image courante.

Ces deux alternatives correspondent aux cas de codage/décodage "intra" et "inter". Bien sûr, le même mode est utilisé au codage et au décodage.

L'invention concerne encore un dispositif de codage d'une séquence d'images vidéo comportant un découpage en zones d'au moins une image courante de la séquence, selon la revendication 16.

L'invention concerne aussi un dispositif de décodage d'une séquence d'images vidéo comportant un découpage en zones d'au moins une image courante de la séquence, selon la revendication 17.

Les dispositifs de codage et de décodage présentent des avantages analogues à ceux des procédés.

L'invention concerne encore des programmes d'ordinateur selon revendications 18 et 19, comportant des instructions de mise en œuvre des procédés précédemment présentés.

D'autres caractéristiques et avantages apparaîtront à la lecture de modes de réalisation préférés décrits en référence aux figures dans lesquelles :
- la figure 1 représente un mode de réalisation de procédé de codage selon l'invention,
- la figure 2 représente une image en cours de codage par le procédé selon l'invention,
- la figure 3 représente un mode de réalisation de procédé de décodage selon l'invention,
- la figure 4 représente un mode de réalisation de dispositif de codage selon l'invention,
- la figure 5 représente un mode de réalisation de dispositif de décodage selon l'invention.

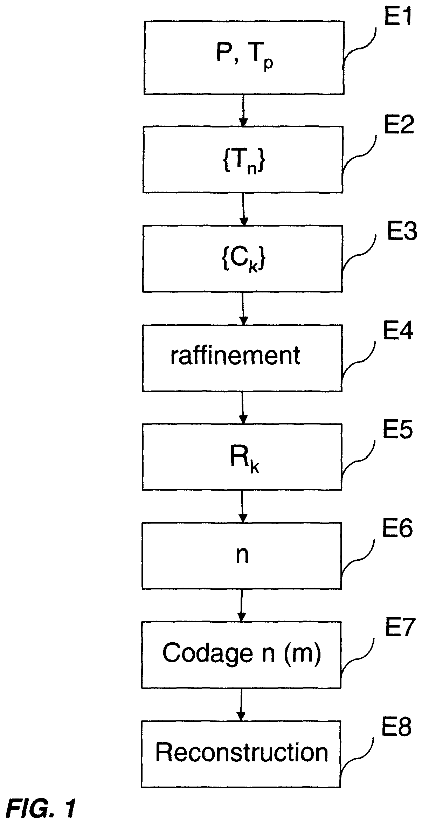

Selon un mode de réalisation de l'invention représenté à la **figure 1**, le procédé de codage de séquence d'images vidéo comporte des étapes E1 à E8.

Les images sont codées les unes après les autres. Pour une image à coder, au moins une zone à coder, dite zone cible, est préalablement formée dans l'image. Cette zone peut être un bloc de pixels, un macro-bloc ou plus généralement une région. Dans la suite, on considère plus particulièrement le cas ou des blocs sont formés dans l'image.

Une image est codée bloc par bloc. Pour un bloc à coder, dit bloc cible, les étapes E1 à E8 sont mises en œuvre.

L'étape E1 est la sélection d'un bloc à coder P, dit bloc cible. Le bloc cible est de taille prédéterminé. Le voisinage Tₚ du bloc cible, dit voisinage cible, est également considéré. Le voisinage cible est un ensemble prédéterminé de pixels voisins du bloc cible. Le voisinage du bloc cible est un masque causal.

Un bloc cible est associé de manière univoque à un voisinage.

Ainsi, pour un bloc cible de taille 2x2 pixels, le masque causal est par exemple l'ensemble des cinq pixels qui bordent le bloc cible sur sa gauche et au-dessus de lui. Selon un autre exemple, le masque causal qui sert de voisinage au sens de l'invention comporte les douze pixels qui forment une bordure de deux pixels d'épaisseur sur la gauche et au-dessus du bloc cible de 2x2 pixels. Bien-sûr, d'autres formes et tailles de bloc cible et de voisinage sont utilisables selon l'invention. Par exemple, le voisinage peut en outre inclure des pixels dans le prolongement droit de la bordure supérieure du bloc cible.

L'étape suivante E2 est la recherche des N zones candidates Tₙ dont les voisinages sont les plus proches du voisinage cible Tₚ. A cette étape, on travaille sur les voisinages, comme dans la méthode dite de "template matching".

La recherche est faite parmi des parties d'images déjà codées et décodées. On y considère des zones source associées de manière univoque à des voisinages source. Les voisinages source sont construits par rapport aux zones source de manière similaire à ce qui a été fait pour la cible. Les zones candidates sont recherchées parmi les zones source ainsi formées.

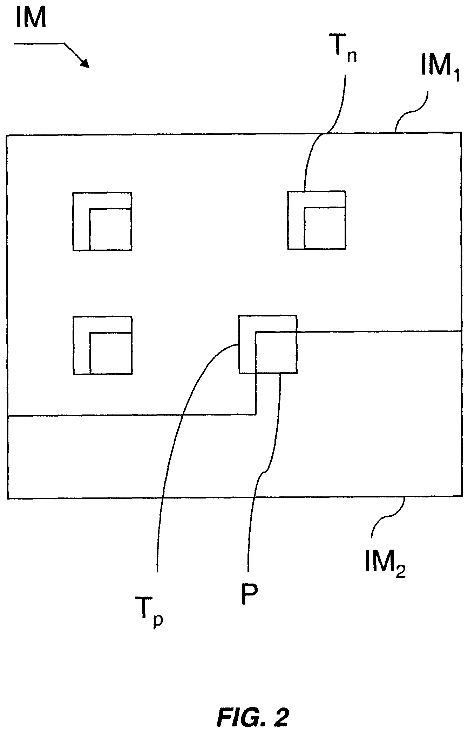

Dans un mode dit "intra", la recherche des zones candidates est faite dans la partie de l'image courante préalablement codée puis décodée par rapport à la zone de voisinage courante, comme représenté à la **figure 2****.** Dans un mode dit "inter", la recherche est faite dans les images codées puis décodées, préalablement à l'image courante.

La figure 2 représente l'image IM en cours de codage. Une partie IM₁ de l'image est déjà codée et sert de source pour les zones candidates. Une partie IM₂ n'est pas encore codée. On considère un ordre de parcours de type "raster scan", mais d'autres parcours sont possibles.

La méthode de recherche est basée sur les corrélations entre voisinages de zones candidates et voisinage cible. Les zones candidates sont sélectionnées par exemple en fonction d'une minimisation d'erreur quadratique ou absolue entre le voisinage de la zone candidate et le voisinage de la zone cible.

L'étape E2 est suivie de l'étape E3 à laquelle un ensemble de K groupes (en anglais : clusters) Cₖ de zones candidates est formé.

Pour cela, une méthode dite de "clustering" est utilisée de manière à regrouper les zones candidates similaires.

Le nombre de groupes est prédéterminé ou est déterminé de manière dynamique.

Dans le premier cas, on utilise par exemple une méthode de regroupement des K moyennes, dite "K-means clustering".

Cette méthode considère K points dans un espace qui représente les objets à regrouper. Ces K points définissent K centroïdes correspondant à K groupes.

Chaque objet à regrouper est affecté à un groupe qui a le plus proche centroïde. Lorsque tous les objets ont été affectés à un groupe, la position des K centroïdes est recalculée.

Les étapes d'affectation d'objet et de recalcul des positions des centroïdes sont réitérées jusqu'à ce que les centroïdes ne soient plus modifiés.

Lorsque le nombre de groupes à former n'est pas spécifié à priori, on utilise par exemple une méthode à seuil de qualité, dite "QT clustering", pour "Quality Threshold Clustering".

Le critère de qualité est défini par le fait que les objets affectés à un même groupe sont suffisamment proches.

Les groupes sont formés itérativement pour d'une part contenir un nombre minimal prédéterminé d'objets et d'autre part que les objets d'un même groupe soient éloignés les uns des autres d'ne distance inférieure à un seuil prédéterminé.

Quelle que soit la méthode de formation des groupes, ceux-ci sont ordonnés lors de cette formation. Un indice est alors affecté à chaque groupe en fonction de cet ordre. Le trie peut être fait selon un critère de similarité du voisinage du centroïde par rapport à la zone cible, ou par le nombre de candidats qui composent les groupes. En effet, si le cardinal d'un groupe est grand, cela signifie que le motif est souvent répété dans l'image, donc qu'il est statistiquement plus probable.

Selon une variante, L'étape E3 est suivie de l'étape E4 qui est un raffinement de l'ensemble des zones candidates à l'intérieur de chaque groupe. A cette étape, pour un groupe donné, on effectue une mesure de similarité. En fonction d'un critère de similarité, on élimine une zone candidate si elle est trop proche ou trop éloignée des autres zones candidates du groupe, car elle risque de fausser la prédiction.

Le choix entre les deux possibilités d'élimination de zones candidates dépend de la variante utilisée pour la détermination d'un représentant pour chaque groupe (étape E5).

L'étape E3 ou l'étape E4 lorsqu'elle est mise en œuvre est suivie de l'étape E5 qui est la détermination d'un représentant Rₖ pour chaque groupe Cₖ de l'ensemble de groupe.

Selon une première variante, le représentant d'un groupe est une moyenne des zones candidates du groupe considéré. Dans ce cas, si l'étape E4 est mise en œuvre, elle éliminera les zones candidates trop éloignées des autres zones candidates du groupe.

Selon une seconde variante, le représentant d'un groupe est la zone candidate qui minimise une erreur de reconstruction par rapport au bloc cible. A cette étape, on ne considère plus les voisinages, mais les blocs. On rappelle qu'à un bloc correspond un voisinage de manière unique. Dans ce cas, si l'étape E4 est mise en œuvre, elle éliminera les zones candidates trop proches des autres zones candidates du groupe.

Pour la seconde variante de l'étape E5, la recherche est basée sur les corrélations entre bloc candidat et bloc cible. Un bloc candidat est sélectionné en fonction d'une minimisation d'erreur quadratique ou absolue entre les blocs candidats et le bloc cible.

Les blocs candidats sont alors ordonnés à l'intérieur de chaque groupe, selon un critère prédéterminé. Par exemple, un groupe est trié par ordre décroissant de proximité des voisinages des blocs candidats avec le voisinage de la zone cible.

Un indice est affecté à chaque bloc candidat du groupe. On note m l'indice du bloc candidat qui est sélectionné dans cette seconde variante de l'étape E5.

Selon une troisième variante de l'étape E5, on détermine les deux types de représentants, et on applique un critère de sélection, par exemple basé sur une mesure de distance (par exemple la variance) entre les candidats, pour choisir l'un ou l'autre représentant. Si les candidats sont assez proches les uns des autres (variance faible), la probabilité que le meilleur représentant soit la moyenne est élevée; si les candidats sont assez éloignés les uns des autres, il est probable que le représentant moyen ne soit pas significatif et dans ce cas on choisira de transmettre l'indice m. Cette troisième variante est particulièrement avantageuse lorsque le nombre de groupe est prédéterminé. En effet, il est alors possible qu'il existe des groupes qui ne sont pas très homogènes.

L'étape suivante E6 est l'identification d'un meilleur représentant minimisant une erreur de reconstruction par rapport à la zone cible.

A cette étape, on ne considère plus les voisinages, mais les blocs. On rappelle qu'un bloc correspond à un voisinage de manière unique.

La recherche est basée sur les corrélations entre représentants des groupes et bloc cible. Un représentant est sélectionné en fonction d'une minimisation d'erreur quadratique ou absolue entre les représentants des groupes et le bloc cible. La sélection d'un représentant correspond à la sélection du groupe associé à ce représentant.

On note n l'indice du groupe qui est sélectionné à l'étape E6.

L'étape suivante E7 est le codage de l'indice n du groupe précédemment sélectionné.

Dans la variante où le représentant est un bloc candidat, son indice m déterminé à l'étape E5 est également codé.

Il est à noter que s'il y a eu raffinement (étape E4), les zones candidates ont été ordonnées dans leur groupe respectif, il est alors plus probable que le bloc candidat sélectionné soit parmi les premiers de son groupe. Les indices n'ont donc pas la même probabilité d'être utilisés. En attribuant une probabilité d'apparition à chaque indice de l'ensemble, le coût de codage de l'indice m est réduit grâce à un codeur entropique classique.

L'étape suivante E8 est la reconstruction du bloc cible à partir du groupe sélectionné à l'étape E6.

La reconstruction du bloc cible comporte tout d'abord la prédiction du bloc cible, c'est-à-dire la recopie des données du bloc représentant vers le bloc cible. Puis la reconstruction du bloc cible comporte le calcul d'un résidu entre le bloc cible et le bloc prédit. Ce résidu est codé puis décodé afin d'être ajouté à la prédiction pour constituer le bloc reconstruit.

Le bloc reconstruit enrichi la source des blocs utilisables pour coder un bloc suivant.

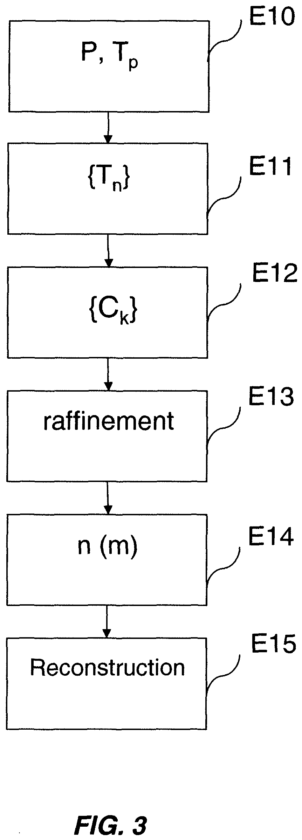

Selon un mode de réalisation de l'invention représenté à la **figure 3**, le procédé de décodage de séquence d'images vidéo comporte des étapes E10 à E15.

Les images sont décodées les unes après les autres. Pour une image à décoder, au moins une zone à décoder est préalablement considérée dans l'image. Cette zone peut être un bloc de pixels, un macro-bloc ou plus généralement une région. Dans la suite, on considère plus particulièrement le cas ou des blocs sont formés dans l'image.

Une image est décodée bloc par bloc. Pour un bloc à décoder, dit bloc cible, les étapes E10 à E15 sont mises en œuvre.

Les étapes E10 à E13 sont très similaires respectivement aux étapes E1 à E4 précédemment décrite.

L'étape E10 est la sélection d'un bloc à décoder P, dit bloc cible. Le bloc cible est de taille prédéterminé. Le voisinage Tₚ du bloc cible, dit voisinage cible, est également considéré. Le voisinage est identique à celui qui a été considéré pour le codage.

L'étape suivante E11 est la recherche des N voisinages des zones candidates Tₙ les plus proches du voisinage Tₚ. A cette étape, on travaille sur les voisinages, comme dans la méthode dite de "template matching".

La recherche est faite parmi des parties d'images déjà décodées. Dans un mode dit "intra", la recherche des zones candidates est faite dans la partie de l'image courante préalablement décodée par rapport à la zone de voisinage courante. Dans un mode dit "inter", la recherche est faite dans les images décodées préalablement à l'image courante.

La méthode de recherche est basée sur les corrélations entre voisinages des zones candidates et le voisinage cible. Les voisinages des zones candidates sont sélectionnés par exemple en fonction d'une minimisation d'erreur quadratique ou absolue entre voisinage de la zone candidate et le voisinage de la zone cible.

L'étape suivante E12 est la formation d'un ensemble de K groupes Cₖ de zones candidates.

Pour cela, une méthode dite de "clustering" est utilisée de manière à regrouper les zones candidates similaires.

Le nombre de groupes est prédéterminé ou est déterminé de manière dynamique.

La méthode utilisée est identique à celle utilisée lors du codage. Les groupes sont ordonnés par la méthode de formation des groupes.

Selon une variante, L'étape E12 est suivie de l'étape E13 qui est un raffinement des zones candidates à l'intérieur de chaque groupe. A cette étape, pour un groupe donné, on effectue une mesure de similarité. En fonction d'un critère de similarité, on élimine une zone candidate si elle est trop proche ou trop éloignée des autres zones candidates du groupe, car elle risque de fausser la prédiction. Ce raffinement est effectué si l'étape similaire de raffinement a été effectuée lors du codage préalable. Le raffinement effectué au décodage est alors identique à celui qui a été effectué lors du codage.

L'étape E12 ou l'étape E13 lorsqu'elle est mise en œuvre est suivie de l'étape E14 qui est le décodage de l'indice n de groupe. Ce décodage dépend du codage de l'indice qui a été effectué à l'étape E7. Selon une variante, l'étape E14 comporte en outre le décodage de l'indice m de la zone candidate qui est le représentant du groupe.

L'étape suivante E15 qui est la reconstruction du bloc cible à partir du groupe identifié par l'indice n de groupe et auquel correspond un représentant, par exemple une moyenne des blocs du groupe. En variante la reconstruction du bloc cible est réalisée à partir du groupe et de son représentant identifiés pas les indices n et m. Dans les deux cas, cette étape comporte une prédiction du bloc cible à partir du bloc représentant du groupe et un décodage du résidu qui est ajouté au résultat de la prédiction. Le bloc reconstruit fait ensuite partie des données qui peuvent être utilisées pour la prédiction de blocs suivants.

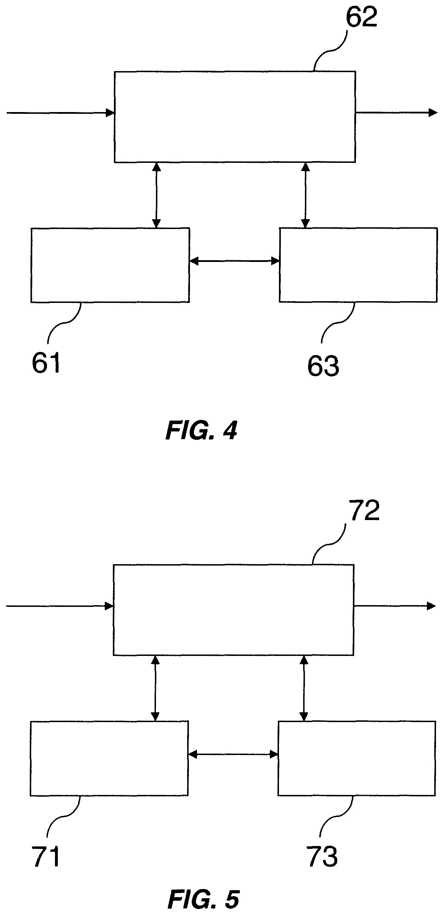

Les **figures 4 et 5** représentent les structures simplifiées d'un dispositif de codage et d'un dispositif de décodage mettant respectivement en œuvre une technique de codage et une technique de décodage telles que décrites ci-dessus.

Un dispositif de codage tel qu'illustré en figure 4 comprend une mémoire 61 comprenant une mémoire tampon, une unité de traitement 62, équipée par exemple d'un microprocesseur, et pilotée par le programme d'ordinateur 63, mettant en œuvre le procédé de codage selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit une image courante à coder. Le microprocesseur de l'unité de traitement 62 met en œuvre les étapes du procédé de codage décrit précédemment, selon les instructions du programme d'ordinateur 63, pour coder l'image courante. Pour le codage d'au moins une zone cible de ladite au moins une image courante, le dispositif de codage comporte, outre la mémoire tampon 61 :
- des moyens de détermination d'un ensemble de zones candidates dans des parties préalablement codées puis décodées d'images de la séquence, minimisant une erreur de prédiction calculée sur le voisinage de la zone cible,
- des moyens de formation d'un ensemble de groupes de zones candidates dans ledit ensemble de zones candidates, en fonction d'un critère de similarité,
- des moyens d'identification d'un meilleur groupe dans ledit ensemble de groupes, minimisant une erreur de reconstruction par rapport à la zone cible,
- des moyens de détermination d'une indication représentative dudit meilleur groupe identifié.

Ces moyens sont pilotés par le microprocesseur de l'unité de traitement 62.

Un dispositif de décodage tel qu'illustré en figure 5 comprend une mémoire 71 comprenant une mémoire tampon, une unité de traitement 72, équipée par exemple d'un microprocesseur, et pilotée par le programme d'ordinateur 73, mettant en œuvre le procédé de décodage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un signal représentatif d'au moins une image codée. Le microprocesseur de l'unité de traitement 72 met en œuvre les étapes du procédé de décodage décrit précédemment, selon les instructions du programme d'ordinateur 73, pour déterminer reconstruire l'image courante. Pour le décodage d'au moins une zone cible à décoder de ladite au moins une image courante, le dispositif de décodage comporte, outre la mémoire tampon 71 :
- des moyens de détermination d'un ensemble de zones candidates dans des parties préalablement codées puis décodées d'images de la séquence, minimisant une erreur de prédiction calculée sur le voisinage de la zone cible,
- des moyens de formation d'un ensemble de groupes de zones candidates en fonction d'un critère de similarité,
- des moyens de lecture d'une indication représentative d'un meilleur groupe,
- des moyens de reconstruction de la zone à décoder à partir du meilleur groupe.

Ces moyens sont pilotés par le microprocesseur de l'unité de traitement 72.

## Revendications

1. Procédé de codage d'une séquence d'images vidéo comportant les étapes de :
- découpage en zones d'au moins une image courante de la séquence,
- pour le codage d'au moins une zone cible de ladite au moins une image courante, détermination d'un ensemble de voisinages candidats associés respectivement à des zones source candidates appartenant à des parties préalablement codées puis décodées d'images de la séquence, minimisant une erreur de prédiction calculée sur le voisinage de la zone cible,
**caractérisé en ce qu'**il comporte les étapes de :
- formation de K groupes de zones candidates à partir desdites zones source candidates, chacun des K groupes contenant des zones candidates similaires, lesdits K groupes étant formés au moyen d'une méthode de clustering,
- identification d'un meilleur groupe parmi lesdits K groupes, ledit meilleur groupe minimisant une erreur de reconstruction par rapport à la zone cible,
- détermination d'une indication (n) représentative dudit meilleur groupe identifié; et
- codage de ladite indication.

2. Procédé de codage selon la revendication 1, dans lequel le nombre K de groupes formés est prédéterminé, K groupes correspondant à K centroïdes définis par K points dans un espace qui représente les zones candidates à regrouper, chaque zone candidate étant affectée à un groupe qui a le plus proche centroïde.

3. Procédé de codage selon la revendication 1, dans lequel le nombre K de groupes formés est déterminé de manière dynamique, lesdits K groupes étant formés itérativement pour d'une part contenir un nombre minimal prédéterminé de zones candidates et d'autre part que les zones candidates d'un même groupe soient éloignées les unes des autres d'une distance inférieure à un seuil prédéterminé.

4. Procédé de codage selon l'une quelconque des revendications 1 à 3, dans lequel lesdits K groupes de zones candidates sont ordonnés selon un critère de similarité du voisinage de leur centroïde respectif par rapport à la zone cible ou bien selon le nombre de leurs zones candidates correspondantes, un indice étant affecté à chaque groupe en fonction de son ordre, et dans lequel l'indication représentative dudit meilleur groupe identifié est un indice dépendant de l'ordre dudit meilleur groupe identifié.

5. Procédé de codage selon la revendication 1, **caractérisé en ce qu'**il comporte en outre les étapes de :
- détermination d'un représentant pour chacun des K groupes,
- identification d'un meilleur représentant minimisant une erreur de reconstruction par rapport à la zone cible.

6. Procédé de codage selon la revendication 5, **caractérisé en ce que**, pour un groupe donné, le représentant est une moyenne des zones candidates du groupe.

7. Procédé de codage selon la revendication 5, **caractérisé en ce que**, pour un groupe donné, le représentant est une zone candidate du groupe qui minimise une erreur de reconstruction par rapport à la zone cible.

8. Procédé de codage selon l'une quelconques des revendications 1 à 7, **caractérisé en ce que** la détermination de l'ensemble de voisinages candidats est effectuée à partir de zones déjà codées et décodées de l'image courante.

9. Procédé de codage selon l'une quelconques des revendications 1 à 7, **caractérisé en ce que** la détermination de l'ensemble de voisinages candidats est effectuée à partir de zones d'images codées et décodées préalablement à l'image courante.

10. Procédé de décodage d'une séquence d'images vidéo comportant les étapes de :
- découpage en zones d'au moins une image courante de la séquence,
- pour le décodage d'au moins une zone cible à décoder de ladite au moins une image courante, détermination d'un ensemble de voisinages candidats associés respectivement à des zones source candidates appartenant à des parties préalablement codées puis décodées d'images de la séquence, minimisant une erreur de prédiction calculée sur le voisinage de la zone cible,
**caractérisé en ce qu'**il comporte les étapes de :
- formation de K groupes de zones candidates à partir desdites zones source candidates, chacun des K groupes contenant des zones candidates similaires, lesdits K groupes étant formés au moyen d'une méthode de clustering,
- lecture d'une indication (n) représentative d'un meilleur groupe parmi lesdits K groupes, ledit meilleur groupe minimisant une erreur de reconstruction par rapport à la zone cible,
- reconstruction de la zone cible à décoder à partir du meilleur groupe.

11. Procédé de décodage selon la revendication 10, dans lequel le nombre K de groupes formés est prédéterminé, K groupes correspondant à K centroïdes définis par K points dans un espace qui représente les zones candidates à regrouper, chaque zone candidate étant affectée à un groupe qui a le plus proche centroïde.

12. Procédé de décodage selon la revendication 10, dans lequel le nombre K de groupes formés est déterminé de manière dynamique, lesdits K groupes étant formés itérativement pour d'une part contenir un nombre minimal prédéterminé de zones candidates et d'autre part que les zones candidates d'un même groupe soient éloignées les unes des autres d'une distance inférieure à un seuil prédéterminé.

13. Procédé de décodage selon l'une quelconque des revendications 10 à 12, dans lequel lesdits K groupes de zones candidates sont ordonnés selon un critère de similarité du voisinage de leur centroïde respectif par rapport à la zone cible ou bien selon le nombre de leurs zones candidates correspondantes, un indice étant affecté à chaque groupe en fonction de son ordre, et dans lequel l'indication représentative dudit meilleur groupe identifié est un indice dépendant de l'ordre dudit meilleur groupe identifié.

14. Procédé de décodage selon l'une quelconques des revendications 10 à 13, **caractérisé en ce que** la détermination de l'ensemble de voisinages candidats est effectuée à partir de zones déjà décodées de l'image courante.

15. Procédé de décodage selon l'une quelconque des revendications 10 à 13, **caractérisé en ce que** la détermination de l'ensemble de voisinages candidats est effectuée à partir de zones d'images décodées préalablement à l'image courante.

16. Dispositif de codage d'une séquence d'images vidéo comportant un découpage en zones d'au moins une image courante de la séquence, ledit dispositif comprenant, pour le codage d'au moins une zone cible de ladite au moins une image courante, des moyens de détermination d'un ensemble de voisinages candidats associés respectivement à des zones source candidates appartenant à des parties préalablement codées puis décodées d'images de la séquence, minimisant une erreur de prédiction calculée sur le voisinage de la zone cible,
**caractérisé en ce qu'**il comprend :
- des moyens de formation de K groupes de zones candidates à partir desdites zones source candidates, chacun des K groupes contenant des zones candidates similaires, lesdits K groupes étant formés au moyen d'une méthode de clustering,
- des moyens d'identification d'un meilleur groupe parmi lesdits K groupes, ledit meilleur groupe minimisant une erreur de reconstruction par rapport à la zone cible,
- des moyens de détermination d'une indication (n) représentative dudit meilleur groupe identifié parmi lesdits K groupes,
- des moyens de codage de ladite indication.

17. Dispositif de décodage d'une séquence d'images vidéo comportant un découpage en zones d'au moins une image courante de la séquence, ledit dispositif comprenant, pour le décodage d'au moins une zone cible à décoder de ladite au moins une image courante, des moyens de détermination d'un ensemble de voisinages candidats associés respectivement à des zones source candidates appartenant à des parties préalablement codées puis décodées d'images de la séquence, minimisant une erreur de prédiction calculée sur le voisinage de la zone cible,
**caractérisé en ce qu'**il comporte :
- des moyens de formation de K groupes de zones candidates à partir desdites zones source candidates, chacun des K groupes contenant des zones candidates similaires, lesdits K groupes étant formés au moyen d'une méthode de clustering,
- des moyens de lecture d'une indication (n) représentative d'un meilleur groupe parmi lesdits K groupes, ledit meilleur groupe minimisant une erreur de reconstruction par rapport à la zone cible,
- des moyens de reconstruction de la zone cible à décoder à partir du meilleur groupe.

18. Programme d'ordinateur comportant des instructions pour la mise en œuvre du procédé de codage selon l'une quelconque des revendications 1 à 9 lorsque ledit programme est exécuté par un processeur.

19. Programme d'ordinateur comportant des instructions pour la mise en œuvre du procédé de décodage selon l'une quelconque des revendications 10 à 15 lorsque ledit programme est exécuté par un processeur.

## Patentansprüche

1. Verfahren zur Codierung einer Videobildsequenz, welches die Schritte umfasst:
- Aufteilung mindestens eines aktuellen Bildes der Sequenz in Bereiche,
- für die Codierung mindestens eines Zielbereichs des mindestens einen aktuellen Bildes, Bestimmung einer Menge von Kandidatumgebungen, die jeweils Kandidat-Quellbereichen zugeordnet sind, die zu zuvor codierten und danach decodierten Teilen von Bildern der Sequenz gehören, welche einen auf der Umgebung des Zielbereichs berechneten Prädiktionsfehler minimiert,
**dadurch gekennzeichnet, dass** es die Schritte umfasst:
- Bildung von K Gruppen von Kandidatbereichen aus den Kandidat-Quellbereichen, wobei jede der K Gruppen ähnliche Kandidatbereiche enthält, wobei die K Gruppen mittels eines Clustering-Verfahrens gebildet werden,
- Identifizierung einer besten Gruppe unter den K Gruppen, wobei die beste Gruppe einen Rekonstruktionsfehler in Bezug auf den Zielbereich minimiert,
- Bestimmung einer Angabe (n), die für die identifizierte beste Gruppe repräsentativ ist; und
- Codierung der Angabe.

2. Verfahren zur Codierung nach Anspruch 1, wobei die Anzahl K von gebildeten Gruppen vorbestimmt ist, wobei K Gruppen K Zentroiden entsprechen, die durch K Punkte in einem Raum definiert sind, welcher die zu gruppierenden Kandidatbereiche repräsentiert, wobei jeder Kandidatbereich einer Gruppe zugewiesen wird, welche den nächsten Zentroid aufweist.

3. Verfahren zur Codierung nach Anspruch 1, wobei die Anzahl K von gebildeten Gruppen dynamisch bestimmt wird, wobei die K Gruppen iterativ so gebildet werden, dass sie einerseits eine vorbestimmte minimale Anzahl von Kandidatbereichen enthalten und dass andererseits die Kandidatbereiche ein und derselben Gruppe einen Abstand voneinander haben, der kleiner als ein vorbestimmter Schwellenwert ist.

4. Verfahren zur Codierung nach einem der Ansprüche 1 bis 3, wobei die K Gruppen von Kandidatbereichen nach einem Kriterium der Ähnlichkeit der Umgebung ihres jeweiligen Zentroids in Bezug auf den Zielbereich geordnet werden, oder auch nach der Anzahl ihrer entsprechenden Kandidatbereiche, wobei jeder Gruppe in Abhängigkeit von ihrer Reihenfolgenummer ein Index zugewiesen wird und wobei die Angabe, die für die identifizierte beste Gruppe repräsentativ ist, ein Index ist, der von der Reihenfolgenummer der identifizierten besten Gruppe abhängt.

5. Verfahren zur Codierung nach Anspruch 1, **dadurch gekennzeichnet, dass** es außerdem die Schritte umfasst:
- Bestimmung eines Repräsentanten für jede der K Gruppen,
- Identifizierung eines besten Repräsentanten, der einen Rekonstruktionsfehler in Bezug auf den Zielbereich minimiert.

6. Verfahren zur Codierung nach Anspruch 5, **dadurch gekennzeichnet, dass** für eine gegebene Gruppe der Repräsentant ein Mittelwert der Kandidatbereiche der Gruppe ist.

7. Verfahren zur Codierung nach Anspruch 5, **dadurch gekennzeichnet, dass** für eine gegebene Gruppe der Repräsentant ein Kandidatbereich der Gruppe ist, welcher einen Rekonstruktionsfehler in Bezug auf den Zielbereich minimiert.

8. Verfahren zur Codierung nach einem der Ansprüche 1 bis 7, **dadurch gekennzeichnet, dass** die Bestimmung der Menge von Kandidatumgebungen anhand von bereits codierten und decodierten Bereichen des aktuellen Bildes erfolgt.

9. Verfahren zur Codierung nach einem der Ansprüche 1 bis 7, **dadurch gekennzeichnet, dass** die Bestimmung der Menge von Kandidatumgebungen anhand von Bereichen von Bildern erfolgt, die vor dem aktuellen Bild codiert und decodiert wurden.

10. Verfahren zur Decodierung einer Videobildsequenz, welches die Schritte umfasst:
- Aufteilung mindestens eines aktuellen Bildes der Sequenz in Bereiche,
- zur Decodierung mindestens eines zu decodierenden Zielbereichs des mindestens einen aktuellen Bildes, Bestimmung einer Menge von Kandidatumgebungen, die jeweils Kandidat-Quellbereichen zugeordnet sind, die zu zuvor codierten und danach decodierten Teilen von Bildern der Sequenz gehören, welche einen auf der Umgebung des Zielbereichs berechneten Prädiktionsfehler minimiert,
**dadurch gekennzeichnet, dass** es die Schritte umfasst:
- Bildung von K Gruppen von Kandidatbereichen aus den Kandidat-Quellbereichen, wobei jede der K Gruppen ähnliche Kandidatbereiche enthält, wobei die K Gruppen mittels eines Clustering-Verfahrens gebildet werden,
- Lesen einer Angabe (n), die für eine beste Gruppe unter den K Gruppen repräsentativ ist, wobei die beste Gruppe einen Rekonstruktionsfehler in Bezug auf den Zielbereich minimiert,
- Rekonstruktion des zu decodierenden Zielbereichs anhand der besten Gruppe.

11. Verfahren zur Decodierung nach Anspruch 10, wobei die Anzahl K von gebildeten Gruppen vorbestimmt ist, wobei K Gruppen K Zentroiden entsprechen, die durch K Punkte in einem Raum definiert sind, welcher die zu gruppierenden Kandidatbereiche repräsentiert, wobei jeder Kandidatbereich einer Gruppe zugewiesen wird, welche den nächsten Zentroid aufweist.

12. Verfahren zur Decodierung nach Anspruch 10, wobei die Anzahl K von gebildeten Gruppen dynamisch bestimmt wird, wobei die K Gruppen iterativ so gebildet werden, dass sie einerseits eine vorbestimmte minimale Anzahl von Kandidatbereichen enthalten und dass andererseits die Kandidatbereiche ein und derselben Gruppe einen Abstand voneinander haben, der kleiner als ein vorbestimmter Schwellenwert ist.

13. Verfahren zur Decodierung nach einem der Ansprüche 10 bis 12, wobei die K Gruppen von Kandidatbereichen nach einem Kriterium der Ähnlichkeit der Umgebung ihres jeweiligen Zentroids in Bezug auf den Zielbereich geordnet werden, oder auch nach der Anzahl ihrer entsprechenden Kandidatbereiche, wobei jeder Gruppe in Abhängigkeit von ihrer Reihenfolgenummer ein Index zugewiesen wird und wobei die Angabe, die für die identifizierte beste Gruppe repräsentativ ist, ein Index ist, der von der Reihenfolgenummer der identifizierten besten Gruppe abhängt.

14. Verfahren zur Decodierung nach einem der Ansprüche 10 bis 13, **dadurch gekennzeichnet, dass** die Bestimmung der Menge von Kandidatumgebungen anhand von bereits decodierten Bereichen des aktuellen Bildes erfolgt.

15. Verfahren zur Decodierung nach einem der Ansprüche 10 bis 13, **dadurch gekennzeichnet, dass** die Bestimmung der Menge von Kandidatumgebungen anhand von Bereichen von Bildern erfolgt, die vor dem aktuellen Bild decodiert wurden.

16. Vorrichtung zur Codierung einer Videobildsequenz, die eine Aufteilung mindestens eines aktuellen Bildes der Sequenz in Bereiche umfasst, wobei die Vorrichtung für die Codierung mindestens eines Zielbereichs des mindestens einen aktuellen Bildes Mittel zur Bestimmung einer Menge von Kandidatumgebungen umfasst, die jeweils Kandidat-Quellbereichen zugeordnet sind, die zu zuvor codierten und danach decodierten Teilen von Bildern der Sequenz gehören, welche einen auf der Umgebung des Zielbereichs berechneten Prädiktionsfehler minimiert,
**dadurch gekennzeichnet, dass** sie umfasst:
- Mittel zur Bildung von K Gruppen von Kandidatbereichen aus den Kandidat-Quellbereichen, wobei jede der K Gruppen ähnliche Kandidatbereiche enthält, wobei die K Gruppen mittels eines Clustering-Verfahrens gebildet werden,
- Mittel zur Identifizierung einer besten Gruppe unter den K Gruppen, wobei die beste Gruppe einen Rekonstruktionsfehler in Bezug auf den Zielbereich minimiert,
- Mittel zur Bestimmung einer Angabe (n), die für die identifizierte beste Grupp unter den K Gruppen repräsentativ ist,
- Mittel zur Codierung der Angabe.

17. Vorrichtung zur Decodierung einer Videobildsequenz, die eine Aufteilung mindestens eines aktuellen Bildes der Sequenz in Bereiche umfasst, wobei die Vorrichtung für die Decodierung mindestens eines zu decodierenden Zielbereichs des mindestens einen aktuellen Bildes Mittel zur Bestimmung einer Menge von Kandidatumgebungen umfasst, die jeweils Kandidat-Quellbereichen zugeordnet sind, die zu zuvor codierten und danach decodierten Teilen von Bildern der Sequenz gehören, welche einen auf der Umgebung des Zielbereichs berechneten Prädiktionsfehler minimiert,
**dadurch gekennzeichnet, dass** sie umfasst:
- Mittel zur Bildung von K Gruppen von Kandidatbereichen aus den Kandidat-Quellbereichen, wobei jede der K Gruppen ähnliche Kandidatbereiche enthält, wobei die K Gruppen mittels eines Clustering-Verfahrens gebildet werden,
- Mittel zum Lesen einer Angabe (n), die für eine beste Gruppe unter den K Gruppen repräsentativ ist, wobei die beste Gruppe einen Rekonstruktionsfehler in Bezug auf den Zielbereich minimiert,
- Mittel zur Rekonstruktion des zu decodierenden Zielbereichs anhand der besten Gruppe.

18. Computerprogramm, welches Anweisungen zur Durchführung des Verfahrens zur Codierung nach einem der Ansprüche 1 bis 9, wenn das Programm von einem Prozessor ausgeführt wird, umfasst.

19. Computerprogramm, welches Anweisungen zur Durchführung des Verfahrens zur Decodierung nach einem der Ansprüche 10 bis 15, wenn das Programm von einem Prozessor ausgeführt wird, umfasst.

## Claims

1. Method for coding a sequence of video images, comprising the steps of:
- dividing into zones at least one current image of the sequence,
- to code at least one target zone of said at least one current image, determining a set of candidate neighborhoods respectively associated with candidate source zones belonging to portions previously coded then decoded of images of the sequence, minimizing a prediction error computed in the neighborhood of the target zone,
**characterized in that** it comprises the steps of:
- forming K groups of candidate zones from said candidate source zones, each of the K groups containing similar candidate zones, said K groups being formed by means of a clustering method,
- identifying a best group among said K groups, said best group minimizing a reconstruction error with respect to the target zone,
- determining an indication (n) representative of said identified best group; and
- coding said indication.

2. Coding method according to Claim 1, wherein the number K of groups formed is preset, K groups corresponding to K centroids defined by K points in a space that represents the candidate zones to be grouped, each candidate zone being assigned to a group that has the closest centroid.

3. Coding method according to Claim 1, wherein the number K of groups formed is determined dynamically, said K groups being formed iteratively so as, on the one hand, to contain a preset minimum number of candidate zones and, on the other hand, so that the candidate zones of a given group are separated from one another by a distance smaller than a preset threshold.

4. Coding method according to any one of Claims 1 to 3, wherein said K groups of candidate zones are ordered depending on a similarity criterion of the neighborhood of their respective centroid with respect to the target zone or indeed depending on the number of their corresponding candidate zones, an index being assigned to each group based on its order, and wherein the indication representative of said identified best group is an index dependent on the order of said identified best group.

5. Coding method according to Claim 1, **characterized in that** it furthermore comprises the steps of:
- determining a representative for each of the K groups,
- identifying a best representative minimizing a reconstruction error with respect to the target zone.

6. Coding method according to Claim 5, **characterized in that**, for a given group, the representative is an average of the candidate zones of the group.

7. Coding method according to Claim 5, **characterized in that**, for a given group, the representative is a candidate zone of the group that minimizes a reconstruction error with respect to the target zone.

8. Coding method according to any one of Claims 1 to 7, **characterized in that** the set of candidate neighborhoods is determined from already coded and decoded zones of the current image.

9. Coding method according to any one of Claims 1 to 7, **characterized in that** the set of candidate neighborhoods is determined from image zones coded and decoded previously to the current image.

10. Method for decoding a sequence of video images, comprising the steps of:
- dividing into zones at least one current image of the sequence,
- to decode at least one target zone to be decoded of said at least one current image, determining a set of candidate neighborhoods respectively associated with candidate source zones belonging to portions previously coded then decoded of images of the sequence, minimizing a prediction error computed in the neighborhood of the target zone,
**characterized in that** it comprises the steps of:
- forming K groups of candidate zones from said candidate source zones, each of the K groups containing similar candidate zones, said K groups being formed by means of a clustering method,
- reading an indication (n) representative of a best group among said K groups, said best group minimizing a reconstruction error with respect to the target zone,
- reconstructing the target zone to be decoded on the basis of the best group.

11. Decoding method according to Claim 10, wherein the number K of groups formed is preset, K groups corresponding to K centroids defined by K points in a space that represents the candidate zones to be grouped, each candidate zone being assigned to a group that has the closest centroid.

12. Decoding method according to Claim 10, wherein the number K of groups formed is determined dynamically, said K groups being formed iteratively so as, on the one hand, to contain a preset minimum number of candidate zones and, on the other hand, so that the candidate zones of a given group are separated from one another by a distance smaller than a preset threshold.

13. Decoding method according to any one of Claims 10 to 12, wherein said K groups of candidate zones are ordered depending on a similarity criterion of the neighborhood of their respective centroid with respect to the target zone or indeed depending on the number of their corresponding candidate zones, an index being assigned to each group based on its order, and wherein the indication representative of said identified best group is an index dependent on the order of said identified best group.

14. Decoding method according to any one of Claims 10 to 13, **characterized in that** the set of candidate neighborhoods is determined from already decoded zones of the current image.

15. Decoding method according to any one of Claims 10 to 13, **characterized in that** the set of candidate neighborhoods is determined from image zones decoded previously to the current image.

16. Device for coding a sequence of video images, comprising dividing into zones at least one current image of the sequence, said device comprising, to code at least one target zone of said at least one current image, means for determining a set of candidate neighborhoods respectively associated with candidate source zones belonging to portions previously coded then decoded of images of the sequence, minimizing a prediction error computed in the neighborhood of the target zone,
**characterized in that** it comprises:
- means for forming K groups of candidate zones from said candidate source zones, each of the K groups containing similar candidate zones, said K groups being formed by means of a clustering method,
- means for identifying a best group among said K groups, said best group minimizing a reconstruction error with respect to the target zone,
- means for determining an indication (n) representative of said identified best group among said K groups; and
- means for coding said indication.

17. Device for decoding a sequence of video images, comprising dividing into zones at least one current image of the sequence, said device comprising, to decode at least one target zone to be decoded of said at least one current image, means for determining a set of candidate neighborhoods respectively associated with candidate source zones belonging to portions previously coded then decoded of images of the sequence, minimizing a prediction error computed in the neighborhood of the target zone,
**characterized in that** it comprises:
- means for forming K groups of candidate zones from said candidate source zones, each of the K groups containing similar candidate zones, said K groups being formed by means of a clustering method,
- means for reading an indication (n) representative of a best group among said K groups, said best group minimizing a reconstruction error with respect to the target zone,
- means for reconstructing the target zone to be decoded on the basis of the best group.

18. Computer program comprising instructions for implementing the coding method according to any one of Claims 1 to 9 when said program is executed by a processor.

19. Computer program comprising instructions for implementing the decoding method according to any one of Claims 10 to 15 when said program is executed by a processor.
